# EUROPEAN PATENT SPECIFICATION

(11) **EP 2 435 743 B1**
(45) Date of publication and mention of the grant of the patent: **01.04.2015**
(21) Application number: 10721184.9
(22) Date of filing: 21.05.2010
(51) Int. Cl.: F16L 23/08

(54) **PIPE COUPLING DEVICE**
ROHRVERBINDUNGSVORRICHTUNG
DISPOSITIF DE RACCORD DE TUYAU

(30) Priority: 28.05.2009 GB 0909216
(43) Date of publication of application: 04.04.2012
(73) Proprietor: Stannseal Ltd, Cheshire CW9 8WB (GB)
(72) Inventor: STANNERS, Craig, Andrew, Cheshire CW9 8WB (GB)
(74) Representative: Cloughley, Peter Andrew
(86) International application number: PCT/GB2010/001016
(87) International publication number: WO 2010/136750

(56) References cited:
- WO-A1-2006/048086
- DE-C- 76 008
- US-A- 3 406 991

## Description

This present invention relates to a pipe coupling device for pipes. The pipes may be used in the water, oil, marine, industrial, gas or sewage industry, for example.

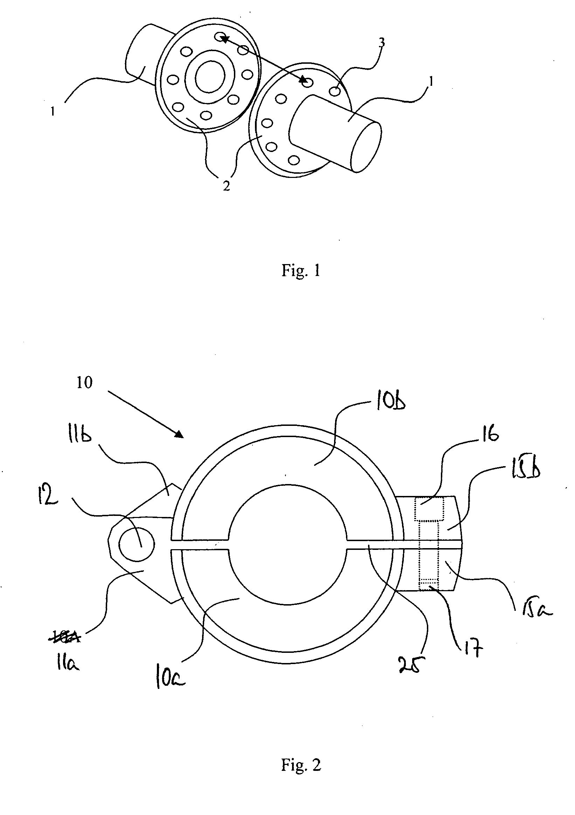

Conventionally, flanged pipes are joined together by aligning and abutting the respective flanges of each pipe, inserting threaded bolts through holes provided in each flange and securing the flanges together with nuts. A washer or inner seal is generally provided between the two abutting flanges to obtain a fluid-tight seal. Fig. 1 shows such flanges joined together. Two pipes 1 are to be joined together via their respective flanges 2. A washer or inner seal, not shown, is inserted between the two flanges. The holes 3 in the flanges 2 of each pipe 1 must be aligned. Threaded bolts are then inserted through the holes and secured by nuts at each end of each bolt. Thus the two pipes are joined together in a fluid-tight manner.

A problem with conventional couplings is that they require the alignment of the two sets of holes of the respective flanges which may be time-consuming and may thus even require at least two people to provide the join between the pipes, one to hold the respective ends of the two pipes together, the other to insert and secure the bolts. The nuts must also be screwed onto the bolts such that alternate ends of the flanges in a radial direction are secured together to prevent undue stresses developing on the flanges. One may, for example, start at the uppermost holes and then proceed to join together the lowermost. Next, the holes which are removed from the uppermost and lowermost holes by 90° may be joined together. Subsequently, the remaining holes are provided with bolts and secured with the nuts.

This process may be very time consuming, particularly for large diameter pipes having a large number of holes, often taking a matter of hours to connect two sections of pipe together. Moreover, any or all of the large number of bolts may rust and/or stick after the pipes have been connected, making it extremely difficult subsequently to disconnect the pipes.

Often such pipes need to be joined together in confined spaces underground, and/or the pipes must be used for high pressure and/or hazardous applications, thereby exacerbating the problems associated with conventional couplings and further increasing difficulties arising from incorrectly coupled sections of pipes.

An object of the present invention is to provide a pipe coupling device suitable for joining two abutting pipes via their flanges that alleviates the problems mentioned above.

According to a first aspect of the invention, there is provided a pipe coupling device for coupling flanged pipes comprising: a housing having first and second sections movable relative to one another between an open position and a closed position, said first and second sections each adapted to receive a portion of respective flanges of a pair of pipes to be coupled; fastening means for fastening the first and second sections around the flanges; and urging means adapted to be disposed in the housing with the flanges and to urge the flanges together as the first and second sections are closed around the flanges, characterised in that the urging means comprises at least two urging members having the shape of an arc of an annulus.

Preferably, as the first and second sections are closed, the urging member transmits the closing force in a direction orthogonal to the direction of closing by way of abutment, whereby at least one said flange is urged towards another.

Preferably, the first and second sections are pivotally connected at one end and fastenable in the closed position at another end.

Preferably, the first and second sections each comprise a receptacle for a portion of each said flange, each said receptacle comprising two opposed side walls and the inner surfaces of the two side walls are substantially parallel to each other.

Preferably, the first and second sections each comprise a receptacle for a portion of each said flange, each said receptacle comprising two opposed side walls, and the inner surface of one of the two side walls is angled with respect to the other such that the distance between the inner surfaces of the two side walls increases with distance away from the outer perimeter of the housing.

Preferably, the each of the urging members comprises opposed first and second side surfaces extending in a direction between inner and outer surfaces, one of the side surfaces being angled with respect to the other such that the thickness of the urging member decreases with distance from the inner surface of the urging member.

Preferably, at least one of said urging members is a substantially half annulus member.

In this case, it is preferred that said urging member has an increased thickness towards its inner surface.

Preferably, at least one of said urging members is provided with a shoulder on its outer perimeter.

In another preferred arrangement, at least one of said urging members is provided with a concave surface so as to define an arc in cross-section.

In one arrangement according to the present invention, a said side wall has a slant shape and the urging means has an inverse slant shape, whereby, as the urging means moves relative to the slanted side wall towards the outer perimeter of the housing, the distance between the urging means and the other said side wall decreases.

Preferably, the urging means is provided with a shoulder on its outer perimeter adapted to engage with a perimeter of one of the flanges.

Embodiments of the present invention will now be described by way of further example only and with reference to the accompanying drawings, in which:
Fig. 1 is a perspective view of a pipe coupling of a conventional type;
Fig. 2 is a plan view of the pipe coupling device housing according to the present invention;
Fig. 3 is a perspective view of one part of the housing according to the present invention;
Fig. 4 is a plan view of pipe coupling device urging members according to the present invention;
Fig. 5 is a cross-sectional view of a pipe coupling device urging member according to a first embodiment;
Fig. 6 is a partial cross-sectional view of a pipe coupling assembly according to the present invention, in which pipe flanges and a device urging member according to the first embodiment are being inserted into the housing;
Fig. 7 is a partial cross-sectional view of the pipe coupling assembly in its final position;
Fig. 8 is a partial cross-sectional view of a pipe coupling assembly using a device urging member according to a second embodiment; and
Fig. 9 is a partial cross-sectional view of a pipe coupling assembly using a device urging member according to a third embodiment.

Fig. 2 is a plan view showing a housing according to the present invention, in the closed position. The housing, generally designated 10, comprises two sections 10a, 10b each having a hinge portion 11 a, 11 b. The two sections 10a, 10b are joined together at the hinge portions 11 a, 11 b using a hinge pin 12. This allows the housing sections 10a, 10b to define an open position and a closed position. Opposite the hinge portions 11 a, 11 b, each section 10a, 10b is provided with a clamp portion 15a, 15b. A bolt 16 and nut 17 are used to lock the two sections 10a, 10b in the closed, coupling position. In fact, it is preferred that a swing bolt arrangement is used as the fastening mechanism, although any other suitable fastening arrangement may be used.

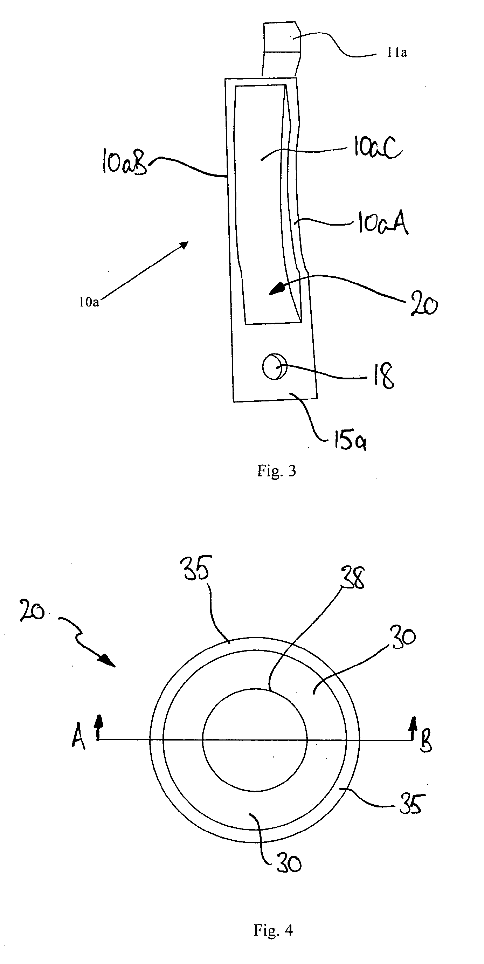

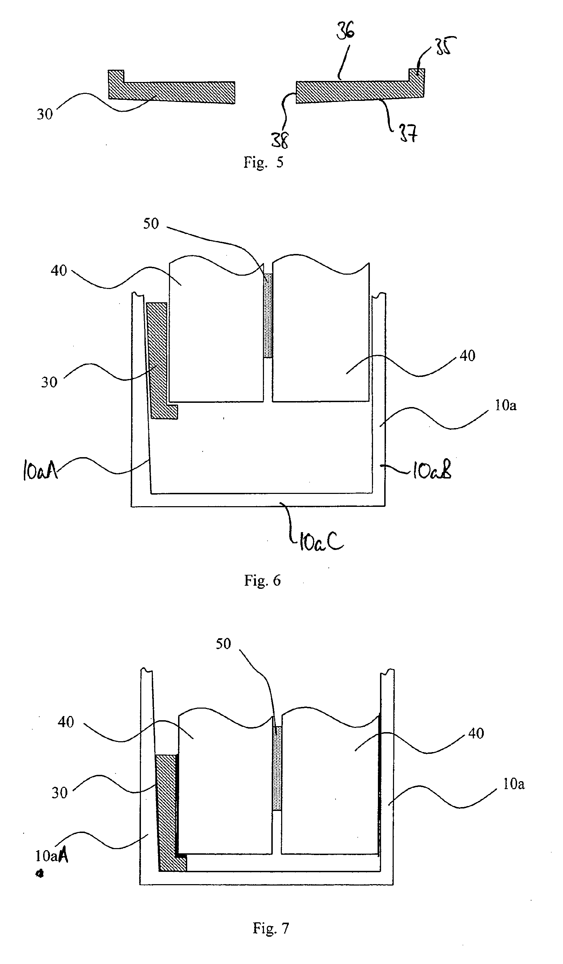

Fig. 3 is a perspective view of section 10a of the housing 10, separated from section 10b. As can be seen, the housing section 10a has a cavity 20, which is defined by two side walls 10aA, 10aB and a bottom curved wall 10aC (see Fig. 6) and is formed between the hinge portion 11a and the clamp portion 15a. Note that in this embodiment a bolt hole 18 is provided to receive the clamping bolt 16.

The cavity 20 is a receptacle shaped so as to be able to receive substantially one half of each of the respective flanges of two pipes to be joined together. The other section 10b is similarly formed and includes a cavity 20 for receiving substantially the other half of each of the respective flanges of two pipes to be joined together. In use, housing 10 is placed in the open position and the housing and/or respective flanges of pipes to be coupled (preferably with a washer or seal between them) are manoeuvred so that part of the flanges lies within the cavity 20 of one of the housing sections 10a, 10b. Subsequently the housing sections 10a, 10b are pivoted with respect to one another about the hinge pin 12 so that the housing 10 encompasses substantially the entire circumference of the flanges. Note, however, that in the present embodiment a gap 25 is provided to account for manufacturing tolerances and to ensure that a tight seal can always be provided, for reasons that will become apparent to the skilled addressee from the subsequent description. The size and diameter of the housing 10 will vary dependent on the size of the flanges being coupled together and the size of the gap 25 will vary accordingly. Typically, however, a preferred size of gap 25 is 4mm.

Once the housing 10 is in place encompassing the flanges of the two abutting pipes, it may be fastened in the closed position using the bolt 16 or other suitable locking means (preferably a swing bolt).

Further details of the housing 10 are shown in, and will be described later with reference to Fig. 6.

Fig. 4 is a plan view of two urging members 30, together forming an annulus, according to the first embodiment of the present invention that are positioned in the housing 10 together with the flanges and are adapted to urge the two flanges together. More specifically, as will become apparent from the subsequent description, each urging member 30 is inserted between one of the two side walls of at least one of the housing sections 10a, 10b on one hand and the outer surface of the one of the flanges on the other hand. Usually two urging members are provided in the housing, one in each section of the housing. However, it is not always necessary to provide two urging members 30 or for an urging member 30 to be provided in solely in one housing section 10a, 10b (rather, an urging member 30 may straddle the two housing sections 10a, 10b) and the present invention is not limited thereto.

Two urging members 30 are usually machined together as a disc 20, as shown in plan view in Fig. 4, and then a cut is made along line AB to provide the separate urging members 30. This allows for a more time efficient and cost effective method of manufacture of the urging members 30.

Fig. 5 shows an urging member 30 according to a first embodiment in cross-section about the line A-B in Fig. 4. As can been seen, each urging member 30 includes an inner perimeter 38, a housing side surface 37, a flange side surface 36, and a shoulder 35 provided at the outer perimeter. The shoulder 35 is adapted to engage with the outer perimeter of at least one of the flanges of the two pipes to be coupled, although it may extend sufficiently in the pipe axial direction to engage with both flanges to assist relative positioning of the two flanges. In the present embodiment, the thickness of the urging member increases with distance from the outer perimeter to the inner perimeter 38.

Fig. 6 is a partial cross-section showing an urging member 30 according to the first embodiment being inserted into one section 10a of the housing 10 together with two flanges 40 of respective pipes to be coupled and an O-ring or gasket seal 50 between the two flanges. In this example, although not shown, the two flanges are also inserted into the cavity 20 of the other housing section 10b with another urging member 30 as the two housing sections 10a, 10b are brought together in the closed position. It is not always necessary to provide the inner seal 50. However, it may assist to provide a fluid-tight seal and is likely to be a requirement in some applications. The inner seal 50 may be comprised of neoprene, EPDM, nitrile or any other suitable material.

In this embodiment, in contrast with the urging members 30, the thickness of one of side walls 10aA of the housing section 10a decreases with distance from the outer perimeter to the inner perimeter 38 so that the side wall 10aA is angled away from the other side wall. This makes the distance between the two side walls greater towards the open end of the cavity 20 of the housing section.

The urging member 30 in this embodiment has a substantially half annulus shape provided with a shoulder 35 at its outer perimeter, as discussed above. The shoulder 35 is brought into contact with the outer perimeter of one of the two flanges 40. The two abutting flanges 40 (preferably with seal 50 therebetween) and the urging member 30 are then inserted into the housing 10. As the housing 10 is closed around the flanges 40, the flanges 40 and the urging member 30 are forced further into the housing 10.

Fig. 7 shows the urging member 30 and the flanges 40 inserted inside the housing section 10. The housing section side wall 10aA is angled away from the opposite wall as described above. The angled side wall 10aA is slanted to become thicker towards the outer perimeter and the urging member 30 is slanted to become thicker towards the inner perimeter. Thus, they are slanted in opposite directions. The housing 10 accommodates the portion of angled urging member 30 which is greatest in thickness at its inner perimeter, the inner perimeter being distal to the bottom wall 10aC of the housing section 10.

As the housing 10 is closed, the moving abutment of the housing-side wall 37 of the urging member 30 against the inner surface of the housing section side wall 10aA causes the urging member 30 to urge the flanges 40 in the longitudinal direction of the pipes/in a direction orthogonal to the closing direction of the housing 10. Specifically, due to the complementary angled surfaces of the housing section side wall 10aA arid the housing-side wall 37 of the urging member 30, as the housing 10 closes and the urging member moves towards the bottom wall 10aC, the combined thickness of the housing section side wall 10aA and the urging member 30 increases, thereby narrowing the distance between the urging member 30 and the other housing section side wall 10aB. The right hand flange 40 in Figs. 6 and 7 abuts the other housing section side wall 10aB. Thus, as the housing 10 closes, the flanges 40 are urged in the right hand direction in the figures and are forced together. This compresses the O-ring or gasket 50 to provide a fluid-tight seal and connection between the pipes.

The gap 25 allows sufficient tolerance to ensure that the two housing sections 10a, 10b can always be brought close enough together to force a fluid tight seal. Where a seal 50 having a degree of elasticity is provided, the components are manufactured with a tolerance to ensure that the seal is sufficiently compressed. If the seal 50 has elasticity, the elasticity may allow the housing 10, urging members 30 and flanges 40 to be manufactured with greater tolerances.

Fig. 7 shows the urging member 30 abutting each of the flange 40, housing section side wall 10aA and the bottom wall 10aC. However, it should be appreciated that abutment with the bottom wall 10aC is not necessary and a sufficient sealing force may be generated before abutment with the bottom wall 10aC is reached.

In a modification, the urging members 30 can be made of a comparatively stiff material and be slightly bowed in the axial direction (orthogonal to the closing direction of the housing 10). The bowed portion is straightened by the urging force, thereby providing a degree of elasticity in the urging member 30. This can allow a minimal degree of movement of the flanges in the axial direction of the flanges and pipes. This beneficial to allow, for example, for ground movement or subsidence in the case the pipes are buried underground. In this case, the elasticity of the seal may maintain fluid tightness.

The housing sections 10a, 10b and the urging member 30 may be made of, for example: ductile iron; cast iron; mild steel; galvanised steel; stainless steel 304 and 316; aluminium; plastic; zinc; titanium; and brass. The present invention is not limited to these materials and other suitable materials may be used.

A coating may be provided on the housing sections 10a, 10b and the urging member 30, for protection, for example, against water, oils or other substance that the coupling device may come into contact with. Suitable coatings include: epoxy; plascoat; scotch, etc.

The joints, including the hinges and fastening means may be made of any of the materials that the housing is made of.

It will be apparent that the present invention allows a particularly simple mechanism to couple pipes. In particular, the present invention makes it a simple matter for a workman, working by himself, to couple to sections of pipe together. In particular, there is no need to accurately marry bolt holes on the two flanges or to tighten a large number of nuts in a particular order. Indeed the bolt holes on the flanges can be done away with entirely, although there presence is not a hindrance to the functioning of the invention, which can therefore be used on existing pipes with no adaptation. Accordingly, the work of joining pipes together can be performed very efficiently, therefore allowing considerable savings in man power. Moreover, the present invention allows the coupling of pipes in enclosed spaces to be performed very much more simply and quickly and significantly reduces the present problems associated with nuts and bolts rusting together. The present invention has been found to be particularly effective in practice up to pressures as high as a 60 bar test pressure and a working pressure of 40 bar and is suitable for use in the most taxing environments.

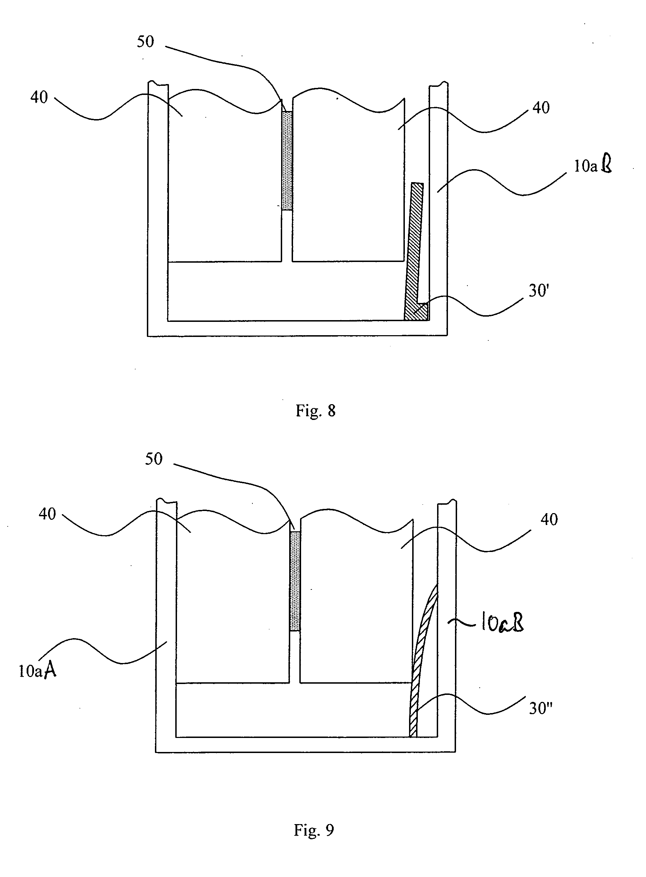

Fig. 8 shows a second embodiment of the present invention. In this figure, the side walls of the housing 10 have a constant thickness, although one or both may be angled as in the first embodiment. The urging means 30' according to the second embodiment will still urge the two flanges together even if the housing section side walls are not parallel to each other. The urging member 30' again has a half annulus shape provided with a shoulder at its outer perimeter. The shoulder in this embodiment is not for engagement with the flanges 40. Rather, the shoulder abuts against one the two side walls of the housing section. In this embodiment the urging member 30' is preferably inserted into the housing 10 before the flanges 40 (as indeed it may be in the first embodiment). The urging member 30' may be angled slightly towards the side walls, which enables the flanges 40 to be inserted with ease past the urging member 12. The urging member 12 is preferably slightly elastic and urges the flanges 40 towards each other thus ensuring a tight seal of the flanges. Increasing or decreasing the length of the shoulder of the urging member 30' in the radial direction ensures that different thicknesses of flanges may be easily accommodated. The slight elasticity of the urging member also enables a slight movement of the flanges in the axial direction of the flanges, which can be useful to accommodate small shifts in the earth and small amounts of subsidence for pipes buried underground.

Fig. 9 shows a third embodiment of the present invention. In this embodiment, as in the second embodiment, the side walls of the housing 10 have a constant thickness, although one or both may be angled as in the first embodiment. Again, the urging member 30" according to the third embodiment may be used in a housing section where the two side walls are not parallel to each other. The urging member 30" is again a half annulus shape. However, in this embodiment, the urging member 30" is not provided with a shoulder, although in other embodiments it may be. If a shoulder is provided, it may be provided as in either the first or second embodiments. The urging member 30" is substantially concave in cross-section such that the urging member 30" is spaced apart from the side wall 10aB of the housing section 10 towards the bottom wall of the housing section. The shape of the urging member 30" enables the housing sections to be closed around the flanges with ease. The urging member 30" is again made of a material which has a slight elasticity which enables the urging member to urge the two flanges together to form a tight seal. The curvature of the urging member may enable different thicknesses of flanges to be accommodated in the same housing section.

It will be apparent that various different shapes and sizes of urging member 30 may be provided. However, it is preferred that the urging members take the form of shims. Moreover, urging members 30 of a single size may be appropriate to accommodate flanges 40 of different sizes and to be housed on housings 10 of different sizes. Similar considerations apply in respect of the housing 10. Of course, the dimensions of the housing 10 and the urging members 30 can be varied depending on the sizes of the pipes to be coupled and the sizes of their flanges.

In the foregoing, the use of two urging members 30 at a time has been described. However, it is possible to couple pipes using one, two or more urging members. It is preferred that the urging members are arcuate, although other shapes will be apparent to those skilled in the art and are encompassed within the present invention. Thus, it is preferred that each of the urging members has the shape of an arc of an annulus - that is, they are annular arc-shaped. It is also noted that the urging members 30 may, but need not, form a whole circle when placed together, even when two or more urging members are used. Moreover, although the urging members 30 shown in Fig. 4 form a circle when placed next to one another, it is expected that there will be a gap between them in use for the reasons explained above in respect of the housing 10. Such urging members could be said to be included within the scope of the term "substantially half annulus members". Of course, the present invention encompasses the situation where there are two substantially half annulus members or one such member and two other members.

Although all the figures show the flanges with an inner seal therebetween, the inner seal may be omitted if required.

Moreover, although both the side wall 10aA and the urging member 30 in the arrangement shown in Figs. 6 & 7 have varying thickness, it is sufficient to provide only one of them with varying thickness. However, the arrangement shown in Figs. 6 & 7 is preferred since it allows the urging force to be applied against a larger surface area of the flange 40 and more substantially in the direction orthogonal to the closing direction/more substantially in the axial direction of the housing, thereby providing a more reliable seal.

As noted above, it is preferred that the two housing sections 10a, 10b are fastened using a swing bolt mechanism. However, other suitable arrangements will be apparent to those skilled in the art. For example, a lever clip similar to that used on preservative jars may be used.

In the foregoing, the urging member 30, 30', 30" is shown in direct contact with the side wall 10aA. However, they need not abut each other directly but can abut indirectly. For example, a PTFE or other sheet may be provided between them in Figs. 6 & 7 to allow them to slide smoothly over one another. Similarly, the components may be coated with coatings (eg a PTFE coating) to provide this functionality. Other intervening bodies may be provided in other portions of the arrangement, for example between the flange 40 and the side wall 10aB, and where two bodies are described as abutting in this specification, it is to be understood that this includes intervening bodies arranged therebetween.

It is to be noted that where components are described as moving in the present specification, movement relative to other components is intended. Thus, where the urging member is described as moving towards the curved wall 10aC, relative movement between them is to be inferred, including at least some or only movement by the curved wall 10aC.

The housing sections 10a, 10b have been described as being joined using a hinge pin. However, other means of joining them are feasible, including the use of a nut and bolt or swing bolt, or a clip.

The walls of the cavity/receptacle 20 have been illustrated as solid continuous walls. However, they need not be. All that is required is for there to be a sufficient surface for the flanges and urging member(s) to abut. Thus, the side walls of each housing section may be joined by a plurality of struts, thereby doing away with the curved bottom wall 10aC. In any event, it is preferred that at least some provision is made in the receptacle/cavity 20 for drainage of rain or ground water.

The foregoing description has been given by way of example only and it will be appreciated by a person skilled in the art that modifications can be made without departing from the spirit and scope of the present invention.

## Claims

1. A pipe coupling device for coupling flanged pipes comprising:
a housing (10) having first and second sections (10a, 10b) movable relative to one another between an open position and a closed position, said first and second sections each adapted to receive a portion of respective flanges (40) of a pair of pipes to be coupled;
fastening means (15a, 15b) for fastening the first and second sections around the flanges; and
urging means (30) adapted to be disposed in the housing with the flanges and to urge the flanges together as the first and second sections are closed around the flanges,
**characterised in that** the urging means comprises at least two urging members having the shape of an arc of an annulus.

2. A pipe coupling device according to claim 1, wherein, as the first and second sections are closed, the urging members transmit the closing force in a direction orthogonal to the direction of closing by way of abutment, whereby at least one said flange is urged towards another.

3. A pipe coupling device according to claim 1 or claim 2, wherein the first and second sections are pivotally connected at one end and fastenable in the closed position at another end.

4. A pipe coupling device according to any one of the preceding claims, wherein the first and second sections each comprise a receptacle (20) for a portion of each said flange, each said receptacle comprising two opposed side walls (10aA, 10aB), wherein the inner surfaces of the two side walls are substantially parallel to each other.

5. A pipe coupling according to any one of the preceding claims, wherein the first and second sections each comprise a receptacle (20) for a portion of each said flange, each said receptacle comprising two opposed side walls (10aA, 10aB), wherein the inner surface of one of the two side walls is angled with respect to the other such that the distance between the inner surfaces of the two side walls increases with distance away from the outer perimeter of the housing.

6. A pipe coupling device according to any one of the preceding claims, wherein each of the urging members comprises opposed first and second side surfaces (36, 37) extending in a direction between inner and outer surfaces, one of the side surfaces being angled with respect to the other such that the thickness of the urging member decreases with distance from the inner surface (38) of the urging member.

7. A pipe coupling device according to any one of the preceding claims, wherein at least one of said urging members is a substantially half annulus member.

8. A pipe coupling device according to claim 7, wherein at least one of said urging members has an increased thickness towards its inner surface.

9. A pipe coupling device according to any one of the preceding claims, wherein at least one of said urging members is provided with a shoulder (35) on its outer perimeter.

10. A pipe coupling device according to any of the preceding claims, wherein at least one of said urging members (30") is provided with a concave surface so as to define an arc in cross-section.

11. A pipe coupling device according to claim 4 or claim 5, wherein a said side wall has a slant shape and the urging means has an inverse slant shape, whereby, as the urging means moves relative to the slanted side wall towards the outer perimeter of the housing, the distance between the urging means and the other said side wall decreases.

12. A pipe coupling device according to any of the preceding claims, wherein the urging means is provided with a shoulder on its outer perimeter adapted to engage with a perimeter of one of the flanges.

## Patentansprüche

1. Rohrverbindungsvorrichtung zum Verbinden von Flanschrohren, umfassend:
eine Gehäuse (10) mit einem ersten und einem zweiten Abschnitt (10a, 10b), die in Bezug zueinander zwischen einer offenen Stellung und einer geschlossenen Stellung beweglich sind, wobei der erste und der zweite Abschnitt jeweils zur Aufnahme eines Teils von entsprechenden Flanschen (40) eines Paars von Rohren, die verbunden werden sollen, geeignet sind;
Befestigungsmittel (15a, 15b) zum Befestigen des ersten und des zweiten Abschnitts um die Flansche; und
ein Vorspannmittel (30), das dazu geeignet ist, mit den Flanschen in dem Gehäuse angeordnet zu werden und die Flansche zueinander hin vorzuspannen, wenn der erste und der zweite Abschnitt um die Flansche geschlossen sind,
**dadurch gekennzeichnet, dass** das Vorspannmittel wenigstens zwei Vorspannelemente umfasst, die die Form eines Bogens oder eines Rings aufweisen.

2. Rohrverbindungsvorrichtung nach Anspruch 1, wobei die Vorspannelemente dann, wenn der erste und der zweite Abschnitt geschlossen sind, die Schließkraft durch Anliegen in eine Richtung übertragen, die orthogonal zu der Richtung des Schließens verläuft, wodurch wenigstens einer der Flansche gegen einen anderen vorgespannt wird.

3. Rohrverbindungsvorrichtung nach Anspruch 1 oder 2, wobei der erste und der zweite Abschnitt an einem Ende schwenkbar verbunden sind und in der geschlossenen Stellung an dem anderen Ende befestigt werden können.

4. Rohrverbindungsvorrichtung nach einem der vorhergehenden Ansprüche, wobei der erste und der zweite Abschnitt jeweils eine Aufnahme (20) für einen Teil jedes genannten Flanschs umfassen, wobei jede genannte Aufnahme zwei entgegengesetzte Seitenwände (10aA, 10aB) umfasst, wobei die Innenflächen der beiden Seitenwände im Wesentlichen parallel zueinander verlaufen.

5. Rohrverbindungsvorrichtung nach einem der vorhergehenden Ansprüche, wobei der erste und der zweite Abschnitt jeweils eine Aufnahme (20) für einen Teil jedes genannten Flanschs umfassen, wobei jede genannte Aufnahme zwei entgegengesetzte Seitenwände (10aA, 10aB) umfasst, wobei die Innenfläche einer der beiden Seitenwände in Bezug auf die andere so abgewinkelt ist, dass der Abstand zwischen den Innenflächen der beiden Seitenwände mit der Entfernung von dem Außenumfang des Gehäuses zunimmt.

6. Rohrverbindungsvorrichtung nach einem der vorhergehenden Ansprüche, wobei jedes der Vorspannelemente zueinander entgegengesetzte Seitenflächen (36, 37) umfasst, die in einer Richtung zwischen der Innen- und der Außenfläche verlaufen, wobei eine der Seitenflächen in Bezug auf die andere so abgewinkelt ist, dass die Dicke des Vorspannelements mit der Entfernung von der Innenfläche (38) des Vorspannelements abnimmt.

7. Rohrverbindungsvorrichtung nach einem der vorhergehenden Ansprüche, wobei wenigstens eines der Vorspannelemente ein im Wesentlichen halbes Ringelement ist.

8. Rohrverbindungsvorrichtung nach Anspruch 7, wobei wenigstens eines der Vorspannelemente zu seiner Innenfläche hin eine zunehmende Dicke aufweist.

9. Rohrverbindungsvorrichtung nach einem der vorhergehenden Ansprüche, wobei wenigstens eines der Vorspannelemente an seinem Außenumfang mit einer Schulter (35) versehen ist.

10. Rohrverbindungsvorrichtung nach einem der vorhergehenden Ansprüche, wobei wenigstens eines der Vorspannelemente (30") mit einer konkaven Fläche versehen ist, um einen bogenförmigen Querschnitt zu definieren.

11. Rohrverbindungsvorrichtung nach Anspruch 4 oder 5, wobei eine genannte Seitenwand eine schräge Form aufweist und das Vorspannmittel eine umgekehrt schräge Form aufweist, wodurch der Abstand zwischen dem Vorspannmittel und der anderen genannten Seitenwand abnimmt, während sich das Vorspannmittel in Bezug auf die schräge Seitenwand zu dem Außenumfang des Gehäuses hin bewegt.

12. Rohrverbindungsvorrichtung nach einem der vorhergehenden Ansprüche, wobei das Vorspannmittel an seinem Außenumfang mit einer Schulter versehen ist, die zum Eingriff mit einem Umfang eines der Flansche geeignet ist.

## Revendications

1. Dispositif de raccord de tuyau pour raccorder des tuyaux bridés comprenant :
un logement (10) présentant des première et seconde sections (10a, 10b) mobiles l'une par rapport à l'autre entre une position ouverte et une position fermée, les première et seconde sections étant chacune adaptée pour recevoir une partie de brides respectives (40) d'une paire de tuyaux devant être raccordés ;
des moyens de fixation (15a, 15b) pour fixer les première et seconde sections autour des brides; et
un moyen de poussée (30) adapté pour être disposé dans le logement avec les brides et pour pousser les brides ensemble lorsque les première et seconde sections soient fermées autour des brides,
**caractérisé en ce que** le moyen de poussée comprend au moins deux membres de poussée ayant la forme d'un arc de cercle.

2. Dispositif de raccord de tuyau selon la revendication 1, dans lequel, lorsque les première et seconde sections sont fermées, les membres de poussée transmettent la force de fermeture dans une direction orthogonale à la direction de fermeture par une butée, sur quoi au moins l'une bride est poussée vers l'autre.

3. Dispositif de raccord de tuyau selon la revendication 1 ou 2, dans lequel les première et seconde sections sont reliées de façon pivotante par une extrémité et peuvent être fixées dans la position fermée par l'autre extrémité.

4. Dispositif de raccord de tuyau selon l'une quelconque des revendications précédentes, dans lequel les première et seconde sections comprennent chacune un réceptacle (20) pour une partie de chacune des brides, chaque réceptacle comprenant deux parois latérales opposées (10aA, 10aB), sachant que les faces intérieures des deux parois latérales sont essentiellement parallèles entre elles.

5. Dispositif de raccord de tuyau selon l'une quelconque des revendications précédentes, dans lequel les première et seconde sections comprennent chacune un réceptacle (20) pour une partie de chacune des brides, chaque réceptacle comprenant deux parois latérales opposées (10aA, 10aB), sachant que la face intérieure de l'une des deux parois latérales est en angle par rapport à l'autre de telle façon que la distance entre les surfaces intérieures des deux parois latérales augmente à mesure de l'éloignement du périmètre extérieur du logement.

6. Dispositif de raccord de tuyau selon l'une quelconque des revendications précédentes, dans lequel chacun des membres de poussée comprend des première et seconde surfaces latérales opposées (36, 37) s'étendant dans une direction entre des surfaces intérieure et extérieure, l'une des surfaces latérales étant en angle par rapport à l'autre de telle façon que l'épaisseur du membre de poussée décroît à mesure de l'éloignement de la surface intérieure (38) du membre de poussée.

7. Dispositif de raccord de tuyau selon l'une quelconque des revendications précédentes, dans lequel au moins l'un des membres de poussée est un membre essentiellement en demi-cercle.

8. Dispositif de raccord de tuyau selon la revendication 7, dans lequel au moins l'un des membres de poussée présente une épaisseur augmentée en direction de sa face intérieure.

9. Dispositif de raccord de tuyau selon l'une quelconque des revendications précédentes, dans lequel au moins l'un des membres de poussée est doté d'un épaulement (35) sur son périmètre extérieur.

10. Dispositif de raccord de tuyau selon l'une quelconque des revendications précédentes, dans lequel au moins l'un des membres de poussée (30'') est doté d'une surface concave de façon à définir un arc en section transversale.

11. Dispositif de raccord de tuyau selon la revendication 4 ou 5, dans lequel une paroi latérale présente une forme oblique et le moyen de poussée présente une forme oblique inverse, ce par quoi, lorsque le moyen de poussée se déplace par rapport à la paroi latérale oblique en direction du périmètre extérieur du logement, la distance entre le moyen de poussée et l'autre paroi latérale décroît.

12. Dispositif de raccord de tuyau selon l'une quelconque des revendications précédentes, dans lequel le moyen de poussée est doté d'un épaulement sur son périmètre extérieur adapté pour se mettre en prise avec un périmètre de l'une des brides.
